(19) Europäisches Patentamt

European Patent Office

Office européen des brevets

(11) Veröffentlichungsnummer: **0 326 636 B1**

(12) **EUROPÄISCHE PATENTSCHRIFT**

(45) Veröffentlichungstag der Patentschrift: **15.01.92**

(21) Anmeldenummer: **88101605.9**

(22) Anmeldetag: **04.02.88**

(51) Int. Cl.⁵: **G01G 19/393**, G01G 13/06

(54) **Zuführeinrichtung für Wägegüter an Abfüllwaagen.**

(43) Veröffentlichungstag der Anmeldung:
**09.08.89 Patentblatt 89/32**

(45) Bekanntmachung des Hinweises auf die
Patenterteilung:
**15.01.92 Patentblatt 92/03**

(84) Benannte Vertragsstaaten:
**AT BE CH DE ES FR GB IT LI NL SE**

(56) Entgegenhaltungen:
EP-A- 0 105 756      EP-A- 0 143 346
DE-A- 3 416 516      DE-A- 3 537 426
DE-A- 3 636 923      DE-U- 8 801 400
GB-A- 2 147 111      US-A- 4 600 065

PATENT ABSTRACTS OF JAPAN, Band 12,
Nr. 161 (P-702)[3008], 17. Mai 1988; & JP-A-62
276 416 (YAMATO SCALE CO. LTD)
01-12-1987

(73) Patentinhaber: **MULTIPOND WÄGETECHNIK
GMBH
Traunreuter Strasse 2
W-8264 Waldkraiburg(DE)**

(72) Erfinder: **Schmidhuber, Josef
Maximilian
W-8261 Kraiburg am Inn(DE)**
Erfinder: **Hauner, Rudolf
Prälat-Krandauer-Strasse 4
W-8261 Kraiburg am Inn(DE)**

(74) Vertreter: **Hoffmann, Klaus, Dr. rer. nat. et al
Hoffmann . Eitle & Partner Patentanwälte
Postfach 81 04 20 Arabellastrasse 4
W-8000 München 81(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 326 636 B1

**Beschreibung**

Die Erfindung betrifft eine Zuführeinrichtung für Wägegüter an Teilmengen-Kombinationsabfüllwaagen. Derartige Abfüllwaagen weisen ein Förderorgan zur Überführung des Wägegutes aus einem Vorratsbehälter zu einer zentralen Verteileinrichtung häufig in Form einer Schwingförderrinne auf. An die Verteileinrichtung sind mehrere Dosierrinnen angeschlossen, die das Wägegut in Vorbehälter und nach Abruf in die eigentlichen Wägebehälter übergeben. Die Wägebehälter sind mit elektrischen Wägezellen kombiniert, deren Meßergebnis an eine zentrale Recheneinheit weitergegeben wird, von wo das Signal zur Öffnung der eigentlichen Wägebehälter in einen Trichter an all diejenigen Wägebehälter gegeben wird, deren Summengewicht dem angestrebten Sollgewicht am nächsten kommt. Eine derartige Einrichtung ist beispielsweise in der DE-PS 31 11 811 dargestellt und beschrieben.

Bei dieser bekannter Bauart einer Zuführeinrichtung für Teilmengen-Kombinationsabfüllwaagen kann bruchempfindliches und/oder an der Oberfläche leicht beschädigbares, kratzempfindliches Wägegut, beispielsweise dünne Kekse, gefüllte dünnschalige Bonbons, schokoladeüberzogene Süßwaren und ähnliche Artikel bei der Übergabe zwischen den einzelnen Stationen der Zuführeinrichtung beschädigt werden oder gar zu Bruch geben, da die Übergabe zwischen den einzelnen Stationen an verschiedenen Stellen im freien Fall erfolgt. So fallen beispielsweise die Artikel des Wägegutes von dem vom Vorratsbehälter herangeführten Förderorgan direkt auf den konischen Verteilerteller, von dem sie in die verschiedenen Dosierrinnen gelangen. Die Übergabe von den Zuführwannen in den Vorbehälter erfolgt bei der vorbekannten Konstruktion gleichfalls im freien Fall; desgleichen die Übergabe vom Vorbehälter nach dessen Öffnung in den eigentlichen Wägebehälter und wiederum von diesem in den Trichter, der die ausgewählten Teilmengen in die Abfüllstation leitet.

Diese Erläuterung zeigt, daß das Wägegut mindestens an vier Stellen im freien Fall weiterbefördert wird, was durch die dabei entwickelte kinetische Energie der Artikel und deren Abbremsung an den harten Wänden und/oder Böden der Fördereinrichtungen häufig mindestens zu einer Beschädigung der Oberfläche, wenn nicht gar zum Bruch von empfindlichem Wägegut der genannten Art führt.

Es ist daher das Ziel der Erfindung, eine Zuführeinrichtung der eingangs genannten Art dahingehend zu verbessern, daß die Gefahr einer Beschädigung oder eines Bruchs der Wägegüter, insbesondere empfindlicher Wägegüter, vermindert wird.

Gemäß der Erfindung wird dieses Ziel mit einer Zuführeinrichtung erreicht, welche sich dadurch auszeichnet, daß am Austrittsende der Dosierrinne in Förderrichtung schräg abwärts geneigte und mit einer Klappe absperrbare Rutschen vorhanden sind und daß die Vorbehälter jeder Wägeeinheit als Schwenkbehälter gestaltet sind, die um eine Achse zwischen einer Befüllstelle mit der Rutsche fluchtend und einer Entleerstellung mit einem schrägen Boden des Wägebehälters fluchtend verschwenkbar sind.

Zweckmäßige Weiterbildungen der erfindungsgemäßen Konstruktion ergeben sich aus den abhängigen Patent ansprüchen.

Durch diese relativ einfache Verbesserung vorbekannter Zuführeinrichtungen wird die Bruch- und Beschädigungsgefahr empfindlicher Wägegüter erheblich vermindert. Die Erfindungsidee besteht im wesentlichen darin, den bei vorbekannten Konstruktionen fest über dem Wägebehälter angeordneten Vorbehälter beweglich zu gestalten und zu einem Teil der Förderelemente in Form einer Rinne umzugestalten, die mit der mit dem konischen Verteilerteller zusammenarbeitenden Dosierrinne kooperiert. Diese Zusammenarbeit wird noch dadurch im Sinne der vorliegenden Aufgabe verbessert, daß die Dosierrinne selbst mit einer Rutsche versehen ist, die so gestaltet und angeordnet ist, daß der als Schwenkbehälter ausgebildete Vorbehälter zwischen dem eigentlichen Wägebehälter und der mit der Dosierrinne zusammenwirkenden Rutsche hin- und hergeschwenkt werden kann. Dadurch wird der freie Fall bei der Übergabe des Wägegutes von der Dosierrinne in den Vorbehälter vermieden. Der freie Fall wird aber auch noch bei der Übergabe vom Vorbehälter in den eigentlichen Wiegebehälter dadurch vermieden, daß in der Entleerungsstellung der Boden des Schwenkbehälters mit dem schrägen Boden des Wägebehälters fluchtet, so daß das Wägegut praktisch gleitend von einem in den anderen Behälter übergeführt wird.

Schließlich ist auch noch die Übergabe des Wägegutes von dem eigentlichen Wägebehälter in den darunter angeordneten Trichter verbessert. Dies wird dadurch erreicht, daß der feste schräge Boden des Wägebehälters in etwa mit der konischen inneren Zylinderwandung des Trichters fluchtet, so daß bei Öffnung der Bodenklappe des Wägebehälters das Wägegut nicht in den Trichter fällt, sondern entlang der gemeinsamen schrägen Ebene in den Trichter gleiten kann.

Die Erfindung wird anhand der folgenden Beschreibung der Zeichnung näher erläutert. In der Zeichnung zeigen:

Fig. 1   eine schematische Darstellung einer vorbekannten Zuführeinrichtung (Stand der Technik),

Fig. 2   eine schematische Ansicht auf ein Ausführungsbeispiel der erfindungsgemäßen Zuführeinrichtung,

Fig. 3    eine perspektivische Ansicht auf die Elemente der Zuführeinrichtung zwischen dem kegelförmigen Verteilteller und dem Trichter zur besseren Veranschaulichung der Wirkungsweise des Schwenkbehälters zwischen Rutsche und Wägebehälter.

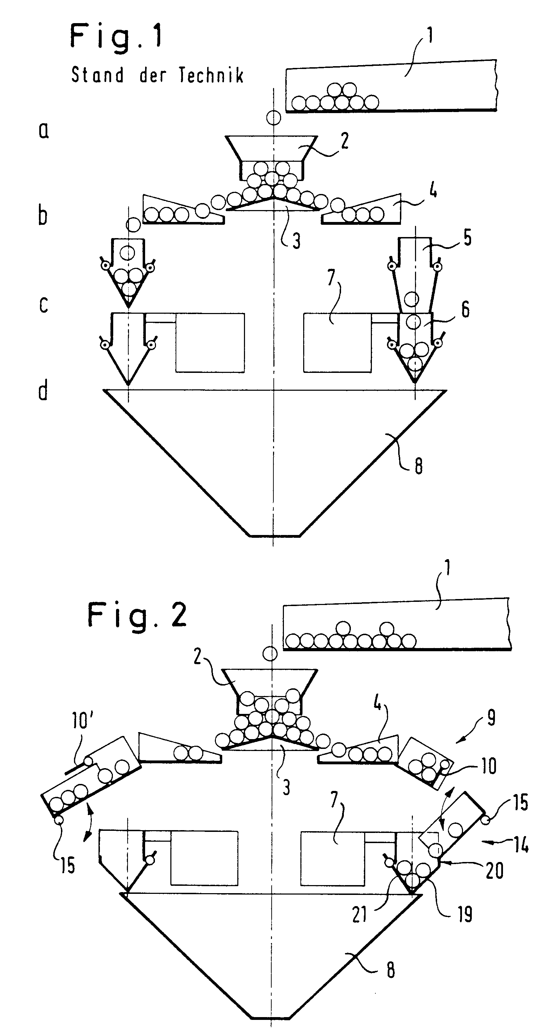

Zum besseren Veständnis der Erfindung sei einleitend auf eine bekannte Zuführeinrichtung gemäß dem Oberbegriff von Patentanspruch 1 hingewiesen. Eine derartige Zuführeinrichtung ist beispielsweise bei der Wägemaschine gemäß Fig. 1 der DE-PS 31 11 811 gezeigt. Gegenüber der Darstellung in der genannten Patentschrift ist die Darstellung von Fig. 1 etwas stärker schematisiert.

Die bekannte Zuführeinrichtung enthält ein Förderorgan in Form einer Schwingförderrinne 1, aus welchem das aus dem Vorratsbehälter stammende Wägegut, das in der Zeichnung in Form kleiner Kugeln dargestellt ist, im freien Fall durch ein trichterförmiges Rohr 2 auf den konischen Verteilteller 3 gelangt. Das Wägegut wird radial von diesem Verteilerteller auf mehrere Dosierrinnen 4 weitergeleitet und fällt am Ende dieser Dosierrinnen in die Vorbehälter 5.

Der in Fig. 1 auf der linken Seite dargestellte Vorbehälter 5 ist mit geschlossenen Klappen dargestellt, so daß das Wägegut sich im Vorbehälter 5 sammelt. Auf der rechten Seite der Fig. 1 sind die Klappen des Vorbehälters 5 offen, so daß das Wägegut in den eigentlichen Wägebehälter 6 fallen kann. Das Gewicht der im Wägebehälter 6 angesammelten Artikel wird von der Wägezelle 7 registriert und von dort einer in der Zeichnung nicht dargestellten zentralen Recheneinheit zugeführt, wo die Ergebnisse in vorbekannter Weise ausgewertet werden. Dabei registriert der Rechner die von den einzelnen Wägeeinheiten ermittelten Gewichte und vergleicht sie miteinander. Dabei werden diejenigen Teilmengen ermittelt, deren Gesamtgewicht dem vorgegebenen Sollgewicht am besten entsprechen, worauf die vom Rechner gesteuerten Klappen geöffnet und die zur ermittelten Kombination gehörenden Teilmengen gemeinsam in den unterhalb der Wägeeinheiten angeordneten Sammeltrichter abgeführt werden.

Die in Fig. 2 gezeigte Ausführung einer erfindungsgemäßen Zuführeinrichtung gestattet es, die beschriebenen Nachteile weitgehend zu eliminieren, indem die Übergabeeinrichtungen an drei Stellen gegenüber der vorbekannten Konstruktion so umkonstruiert wurden, daß dort der zum Bruch bzw. zur Beschädigung des Wägegutes führende freie Fall vermieden ist und das Wägegut schonend transportiert wird.

Wie man aus Fig. 2 erkennt, ist der Eingangsbereich bis zum konischen Verteilteller 3 im wesentlichen unverändert. Man kann auch die Schwingförderrinne so anordnen, daß deren Auslaßöffnung dicht an dem trichterförmigen Rohr 2 anliegt, um in diesem Bereich gleichfalls einen möglichst sanften Übergang von der Rinne 1 zum Verteilteller 3 zu erzielen. Gleiche Teile in den Fig. 1, 2 und 3 sind mit gleichen Bezugsziffern versehen.

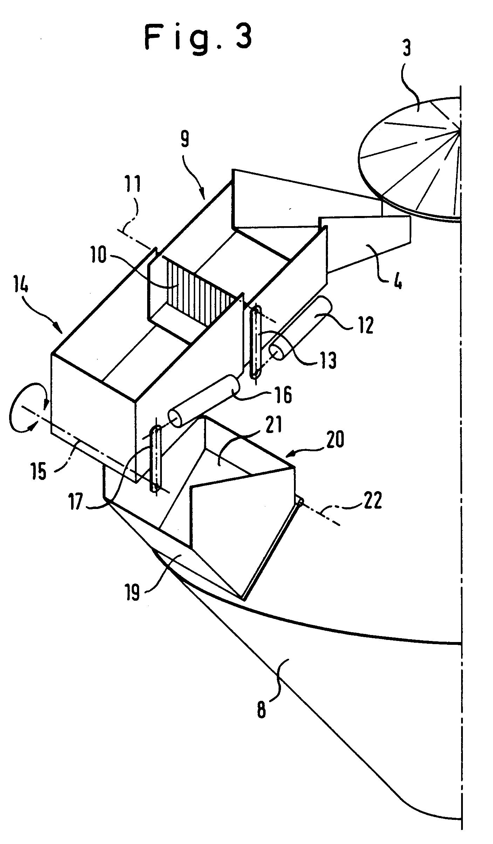

Anschließend gelangt das Wägegut von dem Verteilteller 3 in die Dosierrinnen 4. Am Ende der Dosierrinnen 4 sind jedoch Rutschen 9 unter einem gewissen in Förderrichtung schräg nach abwärts gerichteten einstellbaren Winkel angeordnet. Diese Rutschen 9 weisen an ihren Enden je eine Klappe 10 auf, die um die Schwenkachse 11 aus der in Fig. 3 gezeigten Schließstellung in eine Offenstellung verschwenkt werden kann. Die Schließstellung ist in Fig. 2 auf der rechten Seite und die Offenstellung auf der linken Seite gezeigt. Die Bewegung der Klappe 10 erfolgt über ein Betätigungsorgan 12 in Form eines pneumatischen oder hydraulischen Zylinders, eines Drehmagneten oder einer anderen bekannten Einrichtung, die auf den Schwenkhebel 13 einwirkt.

In der Offenstellung der Klappe gemäß der linken Darstellung in Fig. 2 kann das Wägegut aus der Rutsche 9 in den Vorbehälter 14 rutschen. Der Vorbehälter 14 ist als Schwenkbehälter ausgebildet, der um die Achse 15 aus der in Fig. 2 linken in die in Fig. 2 rechte Stellung verschwenkbar ist. In Fig. 3 befindet sich der Schwenkbehälter 14 in der Befüllungsstellung gemäß der linken Darstellung in Fig. 2.

Der Vorbehälter 14 kann aus der Befüllungsstellung in die Entleerungsstellung über ein Betätigungsorgan 16 verschwenkt werden, das auf den Schwenkhebel 17 einwirkt, welcher mit dem Schwenkbehälter fest verbunden ist und bei entsprechender Betätigung des Organs 16 den Schwenkbehälter 14 in Fig. 3 nach unten verschwenkt, so daß der Boden 18 des Schwenkbehälters 14 in Anlage zum festen Boden 19 des Wägebehälters 20 gelangt. Das Öffnen und Schließen der Klappe 10 und die Verschwenkbewegung des Behälters 14 erfolgen synchron und im einstellbaren Zeittakt von dem Rechner der Kombinationsabfüllwaage gesteuert. Die Klappe 10 wird dabei so gesteuert, daß sie nur dann geschlossen ist, wenn der an die Rutsche 9 anschließende schwenkbare Vorbehälter 14 gerade verschwenkt wird oder sich in seiner Entleerungsstellung gemäß Fig. 2, rechte Seite, befindet. Der Schwenkbehälter 14 besitzt keine Bodenklappe zur Entleerung des Wägegutes in den Wägebehälter 20. Er entleert sich in den Wägebehälter 20 lediglich durch Verschwenken um die Achse 15.

Durch die Anordnung des festen Bodens 19 des Wägebehälters 20 in gleicher Schräglage wie der der Mantelinnenfläche des Trichters 8 ist sichergestellt, daß bei geöffneter Klappe 21 des Wägebehälters 20 das im Wägebehälter befindliche Gut nicht im freien Fall in den Trichter hineinfällt, sondern entlang der inneren Wandung nach unten zur Abfüllstation gleiten kann. Die Klappe 21 des Wägebehälters 20 ist um die Schwenkachse 22 verdrehbar. Die Betätigung erfolgt über ähnliche Organe wie bei der Rutsche 9 bzw. dem Schwenkbehälter 14, die jedoch in Fig. 3 nicht dargestellt sind. Auch die Steuerung der Bewegung der Klappe 21 erfolgt im rechnergesteuerten Takt der Maschine.

Die Rutsche 9 kann je nach der Art des Wägeguts mehr oder weniger steil eingestellt werden. Die Rutsche 9 und der Schwenkbehälter 14 können selbstverständlich auch in bekannter Weise in ähnlicher Art wie die Schwingförderrinne, der konische Verteilteller 3 und die Dosierrinnen 4 mit einer Vibriereinrichtung, beispielsweise einem Vibrationsmagnetantrieb versehen sein, um die Förderung kontinuierlicher zu gestalten und die Ausbildung von Schüttgutwinkeln in den verschiedenen Förderbereichen zu vermeiden.

Schließlich können sowohl die feststehende Rutsche 9 als auch der schwenkbare Vorbehälter 14 mit in der Zeichnung nicht dargestellten Förderbändern in bekannter Weise ausgestattet sein, wodurch das Wägegut ganz besonders schonend gefördert wird. Aus Gründen besseren Gleitens bei gewissen Wägegütern werden einzelnen Elemente der Zuführeinrichtung, insbesondere die verstellbaren Rutschen 9, der Schwenkbehälter 14, der Wägebehälter 20 und der Trichter zweckmäßigerweise aus Kunststoff hergestellt.

Die Erfindung wurde am Beispiel nach den Fig. 2 und 3 näher für eine Teilmengen-Kombinationswaage (sog. Multihead-Waage) erläutert. Es versteht sich jedoch, daß die erfindungsgemäße Zuführeinrichtung auch vorteilhaft für eine Einzelwaage verwendet werden kann. Dabei ist dann abweichend vom beschriebenen Ausführungsbeispiel nur noch eine Dosierrinne 4, eine Rutsche 9 mit einer Klappe 10, ein schwenkbarer Vorbehälter 14 und ein einziger Wägebehälter 20 mit einer Wägezelle 7 vorgesehen.

**Patentansprüche**

1. Zuführeinrichtung für Wägegüter an Teilmengen-Kombinationsabfüllwaagen mit einem Förderorgan zur Überführung des Wägegutes aus einem Vorratsbehälter zur Verteileinrichtung (3) mit Dosierrinnen (4), mit aus Vorbehälter, Wägebehälter (20) und Wägezelle (7) bestehenden Wägeeinheiten sowie mit einem Trichter (8) zur Überführung der ausgewählten Teilmengen in die Abfüllstation, dadurch gekennzeichnet, daß am Austrittsende der Dosierrinnen (4) in Förderrichtung schräg abwärts geneigte und mit einer Klappe (10) absperrbare Rutschen (9) vorhanden sind, und daß die Vorbehälter jeder Wägeeinheit (7, 14, 20) als schwenkbare Vorbehälter (14) gestaltet sind, die um Achsen (15) zwischen der Befüllstellung mit der Rutsche (9) fluchtend und einer Entleerstellung mit einem schrägen Boden (19) des Wägebehälters (20) fluchtend verschwenkbar sind.

2. Zuführeinrichtung nach Anspruch 1, dadurch gekennzeichnet, daß die Wägebehälter (20) je einen festen Boden (19) und eine Bodenklappe (21) aufweisen, wobei der feste Boden (19) unter dem gleichen Winkel wie der Trichter (8) und fluchtend mit dessen innerer Mantelfläche angeordnet ist.

3. Zuführeinrichtung nach Anspruch 1 oder 2, dadurch gekennzeichnet, daß die Rutschen (9) mit unterschiedlichen Winkeln gegenüber den Dosierrinnen (4) einstellbar sind, um in Abhängigkeit von der Konsistenz der Wägegüter und der einstellbaren Dosierzeiten optimale Füllgrade der Wägebehälter zu erzielen.

4. Zuführeinrichtung nach Anspruch 3, dadurch gekennzeichnet, daß sowohl die Rutschen (9) als auch die schwenkbaren Vorbehälter (14) mit Förderbändern ausgestattet sind.

5. Zuführeinrichtung nach Anspruch 4, dadurch gekennzeichnet, daß die Rutschen (9) und schwenkbaren Vorbehälter (14) mit Vibrationserzeugern, beispielsweise Vibrationsmagnetantrieben zur Erzielung eines gleichförmigen Wägegutvorschubes versehen sind.

6. Zuführeinrichtung nach Anspruch 3, dadurch gekennzeichnet, daß die Rutschen (9), die schwenkbaren Vorbehälter (14), der schräge Boden (19) des Wägebehälters oder der ganze Wägebehälter (20) und der Trichter (8) aus einem geeigneten Kunststoff hergestellt sind.

**Claims**

1. A supply device for goods to be weighed on sub-quantity combination filling scales comprising a conveying element for transferring the goods to be weighed from a feed container to the distributing device (3) with dispensing channels (4), comprising weighing units composed of preliminary container, weighing container (20) and weighing cell (7), and comprising a funnel (8) for transferring the selected sub-quantities into the filling station, characterised in that chutes (9) which extend obliquely downwards in the direction of conveyance and which can be closed by a flap (10) are arranged at the outlet end of the dispensing channels (4) and that the preliminary containers of each weighing unit (7, 14, 20) are designed as swivelling preliminary containers (14) which can be swivelled about axes (15) between the charging position in alignment with the chute (9), and a discharging position in alignment with a sloping bottom (19) of the weighing container (20).

2. A supply device as claimed in Claim 1, characterised in that the weighing containers (20) each comprise a fixed bottom (19) and a drop bottom (21), where the fixed bottom (19) is arranged at the same angle as the funnel (8) and in alignment with the inner surface of said funnel.

3. A supply device as claimed in Claim 1 or 2, characterised in that the chutes (9) can be adjusted at different angles relative to the dispensing channels (4) in order to achieve optimal filling levels of the weighing containers in dependence upon the consistency of the goods to be weighed and the adjustable dispensing times.

4. A supply device as claimed in Claim 3, characterised in that both the chutes (9) and the swivelling preliminary containers (14) are equipped with conveyor belts.

5. A supply device as claimed in Claim 4, characterised in that the chutes (9) and the swivelling preliminary containers (14) are provided with vibration generators, for example vibration magnet drives, in order to obtain a uniform advance of the goods to be weighed.

6. A supply device as claimed in Claim 3, characterised in that the chutes (9), the swivelling preliminary containers (14), the sloping bottom (19) of the weighing container or the whole of the weighing container (20) and the funnel (8) are composed of a suitable plastics material.

**Revendications**

1. Dispositif d'alimentation en produits à peser, pour balances de remplissage à combinaisons de quantités partielles, avec un organe de transfert pour transporter le produit à Peser, à partir d'un récipient de réserve vers un dispositif de répartition (3) avec des goulottes de dosage (4), avec des ensembles de pesage composés de pré-récipients, de récipients de pesée (20) et d'une cellule de pesée (7), ainsi qu'avec une trémie (8) pour faire passer les quantités partielles sélectionnées dans le poste de remplissage, caractérisé en ce qu'à l'extrémité de sortie des goulottes de dosage (4) existent des glissoires (9), inclinées en biais vers le bas, dans le sens de transport, et susceptible d'être obturées à l'aide d'un volet (10), et que les prérécipients de chaque unité de pesée (7, 14, 20) sont chacun conformés comme des pré-récipients pivotants (14), susceptibles de pivoter autours d'axes (15), entre la position de remplissage, alignée avec la glissoire (9), et une position de vidage, alignée avec un fond incliné (19) du récipient de pesée (20).

2. Dispositif d'alimentation selon la revendication 1, caractérisé en ce que les récipients de pesée (20) présentent chacun un fond fixe (19) et un volet de fond (21), le fond fixe (19) étant disposé avec le même angle que la trémie (8) et aligné avec sa surface d'enveloppe intérieure.

3. Dispositif d'alimentation selon la revendication 1 ou 2, caractérisé en ce que les glissoires (9) sont réglables avec des angles différents par rapport aux goulottes de dosage (4), pour obtenir un degré de remplissage optimal des récipients de pesée, en fonction de la consistance des produits pesés et des durées de dosage réglables.

4. Dispositif d'alimentation selon la revendication 3, caractérisé en ce que tant les glissoires (9) qu'également les pré-récipients pivotants (14) sont équipés de transporteurs à bande.

5. Dispositif d'alimentation selon la revendication 4, caractérisé en ce que les glissoires (9) et les prérécipients pivotants (14) sont pourvus de générateurs de vibration, par exemple à entraînement magnétique des vibration, pour obtenir une progression uniforme du produit à peser.

6. Dispositif d'alimentation selon la revendication 3, caractérisé en ce que les glissoires (9), les pré-récipients pivotants (14), le fond incliné (19) du récipient de pesée ou la totalité du récipient de pesée (20) et la trémie (8) sont fabriqués en une matière synthétique appropriée.

# Fig.1
### Stand der Technik

# Fig.2

# Fig. 3